# EUROPEAN PATENT APPLICATION

(11) **EP 4 606 857 A1**
(43) Date of publication of application: **27.08.2025**
(21) Application number: 23880155.9
(22) Date of filing: 17.10.2023
(51) Int. Cl.: C08L 55/02, C08L 51/04, C08L 25/12, C08L 101/00, C08K 3/013, C08K 3/22

(54) **THERMOPLASTIC RESIN COMPOSITION**

(30) Priority: 19.10.2022 KR 20220134853; 16.10.2023 KR 20230137677
(71) Applicant: LG CHEM, LTD., Seoul 07336 (KR)
(72) Inventor: KIM, Yeong Min, Daejeon 34122 (KR); KIM, Seo Hwa, Daejeon 34122 (KR); CHOI, Eun Jung, Daejeon 34122 (KR); LEE, Soo Jin, Daejeon 34122 (KR); BAE, Sung Ho, Daejeon 34122 (KR)
(74) Representative: Goddar, Heinz J.
(86) International application number: PCT/KR2023/015987
(87) International publication number: WO 2024/085578

(57) **Abstract**

The present invention relates to a thermoplastic resin composition, and the thermoplastic resin composition includes: a base resin including a recycled resin, a new diene-based graft polymer, and a new vinyl-based non-grafted polymer; and an additive including a special pigment and an inorganic oxide in a weight ratio of 1:1.10 to 10.00.

## Description

### [Technical Field]

### Cross-Reference to Related Application

The present invention claims priority to and the benefit of Korean Patent Application No. 10-2022-0134853, filed on October 19, 2022, and Korean Patent Application No. 10-2023-0137677, filed on October 16, 2023, the entire contents of which are incorporated herein by reference.

### Technical Field

The present invention relates to a thermoplastic resin composition.

### [Background Art]

Diene-based graft polymers include a diene-based rubber polymer and a shell including an aromatic vinyl-based monomer unit and a vinyl cyanide-based monomer unit that are grafted to the diene-based rubber polymer. Compared to existing high impact polystyrene (HIPS), diene-based graft polymers have high impact resistance, chemical resistance, thermal stability, colorability, fatigue resistance, rigidity, and processability. Due to these properties, diene-based rubber thermoplastic resin molded products produced from diene-based graft polymers are used as parts of automotive interior and exterior materials, office appliances, and various electrical and electronic products.

Meanwhile, a thermoplastic resin composition has to include recycled resins to be certified as an eco-friendly product. However, since recycled resins have already been used, recycled resins have reduced impact resistance, tensile force, chemical resistance, and thermal stability compared to a new resin, and when processed, foreign substances appear on the surface of molded products. For these reasons, recycled resins have been used in low-grade materials. In order to solve such problems, new technologies are being developed to produce eco-friendly products by mixing a new resin in a certain ratio. Nevertheless, thermoplastic resin molded products using recycled resins still have problems such as the reduction in appearance characteristics due to foreign substances and the reduction in chemical resistance.

### [Disclosure]

### [Technical Problem]

The present invention is directed to providing a thermoplastic resin composition with excellent appearance characteristics, impact resistance, tensile force, and chemical resistance.

### [Technical Solution]

In order to solve the above-described problems, 1) the present invention provides a thermoplastic resin composition including: a base resin including a recycled resin, a new diene-based graft polymer, and a new vinyl-based non-grafted polymer; and an additive including a special pigment and an inorganic oxide in a weight ratio of 1:1.10 to 10.00.
2) According to 1), the present invention may provide a thermoplastic resin composition including the special pigment in an amount of 0.01 to 10.00 parts by weight based on 100 parts by weight of the base resin.
3) According to 1) or 2), the present invention may provide a thermoplastic resin composition, wherein the special pigment includes one or more selected from the group consisting of cellulose, rayon, and silicate minerals.
4) According to any one of 1) to 3), the present invention may provide a thermoplastic resin composition including the inorganic oxide in an amount of 0.10 to 10.00 parts by weight based on 100 parts by weight of the base resin.
5) According to any one of 1) to 4), the present invention may provide a thermoplastic resin composition, wherein the inorganic oxide is one or more selected from the group consisting of titanium dioxide, magnesium oxide, and calcium oxide.
6) According to any one of 1) to 5), the present invention may provide a thermoplastic resin composition, wherein the recycled resin includes 8 to 25 wt% of diene-based monomer units, 15 to 30 wt% of vinyl cyanide-based monomer units, and a balance as aromatic vinyl-based monomer units.
7) According to any one of 1) to 6), the present invention may provide a thermoplastic resin composition including the recycled resin in an amount of 10.00 to 92.00 parts by weight based on 100 parts by weight of the base resin.
8) According to any one of 1) to 7), the present invention may provide a thermoplastic resin composition, wherein the new diene-based graft polymer includes a diene-based rubber polymer and a shell including an aromatic vinyl-based monomer unit and a vinyl cyanide-based monomer unit that are grafted to the diene-based rubber polymer.
9) According to any one of 1) to 8), the present invention may provide a thermoplastic resin composition including the new diene-based graft polymer in an amount of 2.00 to 36.00 parts by weight based on 100 parts by weight of the base resin.
10) According to any one of 1) to 9), the present invention may provide a thermoplastic resin composition, wherein the new vinyl-based non-grafted polymer includes an aromatic vinyl-based monomer unit and a vinyl cyanide-based monomer unit.
11) According to any one of 1) to 10), the present invention may provide a thermoplastic resin composition, wherein the additive includes an olefin-based non-grafted polymer including: an olefin-based monomer unit; and one or more selected from the group consisting of a (meth)acrylate-based monomer unit and a vinyl acetate monomer unit.
12) According to 11), the present invention may provide a thermoplastic resin composition including the olefin-based non-grafted polymer in an amount of 1.00 to 10.00 parts by weight based on 100 parts by weight of the base resin.

### [Advantageous Effects]

A thermoplastic resin composition according to the present invention can exhibit excellent appearance characteristics, impact resistance, tensile force, and chemical resistance despite a recycled resin being included in the thermoplastic resin composition.

### [Modes of the Invention]

Hereinafter, the present invention will be described in further detail to help in understanding the present invention.

Terms and words in this specification and claims should not be construed as limited to their conventional or dictionary meanings but should be construed as a meaning and concept consistent with the technical idea of the present invention based on the principle that the inventors can properly define the concept of terms in order to describe their invention in the best way.

In the present invention, a diene-based monomer may be one or more selected from the group consisting of 1,3-butadiene, isoprene, chloroprene, and piperylene, with 1,3-butadiene being preferred. A unit derived from a diene-based monomer may be a diene-based monomer unit.

In the present invention, an aromatic vinyl-based monomer may be one or more selected from the group consisting of α-methyl styrene, α-ethyl styrene, p-methyl styrene, 2,4-dimethyl styrene, styrene, p-fluoro styrene, p-chloro styrene, and p-bromo styrene, with styrene being preferred. A unit derived from an aromatic vinyl-based monomer may be an aromatic vinyl-based monomer unit.

In the present invention, a vinyl cyanide-based monomer may be one or more selected from the group consisting of acrylonitrile, methacrylonitrile, (Z)-3-phenyl acrylonitrile, and α-chloro acrylonitrile, with acrylonitrile being preferred. A unit derived from a vinyl cyanide-based monomer may be a vinyl cyanide-based monomer unit.

In the present invention, an olefin-based monomer may be one or more selected from the group consisting of ethylene, propylene, and butylene, with ethylene being preferred.

In the present invention, a (meth)acrylate-based monomer may be a term encompassing an acrylate-based monomer and a methacrylate-based monomer. The (meth)acrylate-based monomer may be a C₁-C₁₀ alkyl (meth)acrylate monomer and one or more selected from the group consisting of methyl (meth)acrylate, ethyl (meth)acrylate, propyl (meth)acrylate, butyl (meth)acrylate, heptyl (meth)acrylate, hexyl (meth)acrylate, 2-ethylhexyl (meth)acrylate, and decyl (meth)acrylate, with one or more selected from the group consisting of ethyl acrylate and butyl acrylate being preferred.

In the present invention, a grafting rate of a new diene-based graft polymer may be calculated by the following method.

First, 2 g of a new diene-based graft polymer powder is dissolved in 300 ml of acetone while stirring for 24 hours and then separated using a centrifuge to obtain a precipitate. The precipitate is dried at 60 to 120°C to obtain a dried product. Then, a weight of the dried product is measured, and the measured value is substituted into the formula below. Grafting rate (%) = [(weight of new diene-based graft polymer powder (2 g)) - (weight of dried product) - (weight of diene-based rubber polymer)] / (weight of diene-based rubber polymer) × 100

Weight of diene-based rubber polymer: Weight of a diene-based rubber polymer theoretically contained in 2 g of a new diene-based graft polymer powder; or weight of a diene-based rubber polymer measured by analyzing 2 g of a new diene-based graft polymer powder using infrared spectroscopy.

**In** the present invention, a weight-average molecular weight of a shell in a new diene-based graft polymer may be a weight-average molecular weight of a polymer including an aromatic vinyl-based monomer unit and a vinyl cyanide-based monomer unit that are grafted to a diene-based rubber polymer.

In the present invention, a weight-average molecular weight of a shell in a new diene-based graft polymer may be calculated by the following method.

A new diene-based graft polymer is dissolved in a tetrahydrofuran (THF) solution (concentration: 1 wt%) and then passed through a 1 µm filter. The weight-average molecular weight of a shell may be measured as a relative value with respect to a standard polystyrene sample by gel permeation chromatography of the filtered solution.

**In** the present invention, an average particle diameter of a diene-based rubber polymer may be measured by dynamic light scattering, and specifically, the average particle diameter may refer to an arithmetic mean particle diameter in the particle size distribution as measured by dynamic light scattering, that is, an average particle diameter based on a scattering intensity distribution.

In the present invention, the average particle diameter of a diene-based rubber polymer may be measured using a Nicomp 380 instrument commercially available from Particle Sizing Systems.

In the present invention, a weight-average molecular weight of a non-grafted polymer may be measured as a relative value with respect to a standard polystyrene sample by gel permeation chromatography using tetrahydrofuran as an eluent.

In the present invention, a length and an average diameter of a special pigment and an average particle diameter of an inorganic oxide may be measured using nitrogen adsorption. Specifically, measurement may be made using a BET analysis instrument, Surface Area and Porosity Analyzer ASAP 2020 commercially available from Micromeritics.

### Thermoplastic resin composition

A thermoplastic resin composition according to an embodiment of the present invention includes: 1) a base resin including a recycled resin, a new diene-based graft polymer, and a new vinyl-based non-grafted polymer; and 2) an additive including a special pigment and an inorganic oxide in a weight ratio of 1:1.10 to 10.00.

The special pigment and inorganic oxide may be included in a weight ratio of 1:1.10 to 10.00, preferably 1:2.00 to 9.00, more preferably 1:3.00 to 8.50, even more preferably 1:3.00 to 8.00, and most preferably 1:5.00 to 7.00. When the inorganic oxide is included in a smaller amount than the above-mentioned condition, a phenomenon that the special pigment is oriented in a flow direction of the resin is not concealed, resulting in a reduction in appearance characteristics of the injection molded product. When the inorganic oxide is included in a larger amount than the above-mentioned condition, the impact resistance of the thermoplastic resin composition is reduced.

Hereinafter, components of a thermoplastic resin composition according to an embodiment of the present invention will be described in detail.

### 1. Base resin

### 1) Recycled resin

A recycled resin is a component included in a thermoplastic resin composition to be certified as an eco-friendly product and is a recycled product that is reused by processing used resins or resin waste. Specifically, the recycled resin may be resin waste which can be reused after being collected, crushed, washed, separated and sorted, and processed for various purposes. The form of the recycled resin is not particularly limited.

The recycled resin may be one or more selected from the group consisting of recycled polyethylene, recycled polypropylene, recycled polyester, recycled polystyrene, recycled polyamide, recycled polycarbonate, a recycled diene-based graft polymer, and a recycled vinyl-based non-grafted polymer.

The recycled resin may include a diene-based monomer unit, a vinyl cyanide-based monomer unit, and an aromatic vinyl-based monomer unit. The diene-based monomer unit may improve the impact resistance of the recycled resin. The vinyl cyanide-based monomer unit may improve the chemical resistance of the recycled resin. **In** addition, the aromatic vinyl-based monomer unit may improve the processability of the recycled resin.

The recycled resin may include 8.00 to 25.00 wt% of the diene-based monomer units, preferably 12.00 to 18.00 wt%. When this condition is satisfied, the impact resistance of the recycled resin may be further improved.

The recycled resin may include 15 to 30 wt% of the vinyl cyanide-based monomer units, preferably 18 to 24 wt%. When this condition is satisfied, the chemical resistance of the recycled resin may be further improved.

The recycled resin may include a balance as the aromatic vinyl-based monomer units so that a total weight of the recycled resin becomes 100 wt%.

An amount of the recycled resin may be 10.00 to 92.00 parts by weight, preferably 30.00 to 80.00 parts by weight based on 100 parts by weight of the base resin. When this condition is satisfied, a carbon reduction effect and an adequate level of physical properties may be achieved.

### 2) New diene-based graft polymer

A new diene-based graft polymer is a diene-based graft polymer that has never been used, which is a component that improves the impact resistance of the thermoplastic resin composition.

The new diene-based graft polymer may be a graft polymer including a diene-based rubber polymer and a shell including an aromatic vinyl-based monomer unit and a vinyl cyanide-based monomer unit that are grafted to the diene-based rubber polymer. The shell may include an aromatic vinyl-based monomer unit and a vinyl cyanide-based monomer unit that are not grafted to the diene-based rubber polymer.

The diene-based rubber polymer may be prepared by polymerizing, preferably cross-linking, diene-based monomers and have an average particle diameter of 50 to 600 nm, preferably 150 to 450 nm. When this condition is satisfied, the impact resistance and surface properties of the diene-based graft polymer may be improved.

An amount of the diene-based rubber polymer in the diene-based graft polymer may be 40 to 80 wt%, preferably 50 to 70 wt%. When this condition is satisfied, the impact resistance of the diene-based graft polymer may be further improved.

An amount of the aromatic vinyl-based monomer unit in the diene-based graft polymer may be 10 to 50 wt%, preferably 20 to 40 wt%. When this condition is satisfied, the processability of the diene-based graft polymer may be further improved.

An amount of the vinyl cyanide-based monomer unit in the diene-based graft polymer may be 1 to 30 wt%, preferably 5 to 25 wt%. When this condition is satisfied, the chemical resistance of the diene-based graft polymer may be further improved.

A grafting rate of the new diene-based graft polymer may be 25.0 to 70.0%, preferably 30.0 to 65.0%, more preferably 30.0 to 50.0%. When this condition is satisfied, an adequate level of impact resistance may be achieved without a reduction in fluidity of the thermoplastic resin composition.

A weight-average molecular weight of the shell in the new diene-based graft polymer may be 50,000 to 200,000 g/mol, preferably 65,000 to 180,000 g/mol, more preferably 65,000 to 75,000 g/mol. When this condition is satisfied, an adequate level of impact resistance may be achieved without a reduction in fluidity of the thermoplastic resin composition.

An amount of the new diene-based graft polymer may be 2.00 to 36.00 parts by weight, preferably 10.00 to 28.00 parts by weight, based on 100 parts by weight of the base resin. When this condition is satisfied, the impact resistance and surface properties of the thermoplastic resin composition may be further improved.

### 3) New vinyl-based non-grafted polymer

A new vinyl-based non-grafted polymer is a vinyl-based non-grafted polymer that has never been used, which is a component that improves the processability of the thermoplastic resin composition.

The vinyl-based non-grafted polymer may include an aromatic vinyl-based monomer unit and a vinyl cyanide-based monomer unit.

The vinyl-based non-grafted polymer may include the aromatic vinyl-based monomer unit and the vinyl cyanide-based monomer unit in a weight ratio of 90:10 to 60:40, preferably 85:15 to 65:35. When this condition is satisfied, a vinyl-based non-grafted polymer with improved processability and chemical resistance may be prepared.

A weight-average molecular weight of the vinyl-based non-grafted polymer may be 70,000 to 200,000 g/mol, preferably 90,000 to 200,000 g/mol, more preferably 90,000 to 160,000 g/mol. When this condition is satisfied, an adequate level of impact resistance may be achieved without a reduction in fluidity of the thermoplastic resin composition.

The vinyl-based non-grafted polymer may be included as a balance so that a total amount of the components of the base resin becomes 100 parts by weight.

### 2. Additive

### 1) Special pigment

A special pigment is a component included to conceal foreign substances generated due to a recycled resin, which appears on a surface of a molded product produced from the thermoplastic resin composition.

Due to the special pigment, a molded product produced from the thermoplastic resin composition may have irregular patterns, such as granite or marble, on a surface, and therefore, foreign substances generated due to a recycled resin may be effectively concealed.

The special pigment may be a fiber-type pigment or a plate-type pigment. When the special pigment is in the form of a fiber, a length of the special pigment may be 0.1 to 5.0 mm, preferably 0.2 to 1.0 mm. When the special pigment is in the form of a plate, an average diameter of the special pigment may be 0.1 to 5.0 mm, preferably 0.3 to 1.0 mm. When the above-mentioned conditions are satisfied, foreign substances on the surface of the molded product produced from the thermoplastic resin composition may be effectively concealed while a reduction in impact resistance of the thermoplastic resin composition is minimized.

The special pigment may be one or more selected from the group consisting of cellulose, rayon, and silicate minerals. The silicate mineral may be mica.

An amount of the special pigment may be 0.01 to 10.00 parts by weight, preferably 0.10 to 5.00 parts by weight, based on 100 parts by weight of the base resin. When this condition is satisfied, foreign substances on the surface of the molded product produced from the thermoplastic resin composition may be effectively concealed while a reduction in impact resistance of the thermoplastic resin composition is minimized.

### 2) Inorganic oxide

An inorganic oxide is a component which can conceal a weld line generated due to an orientation of the special pigment, which appears on a molded product produced from the thermoplastic resin composition.

The inorganic oxide may be one or more selected from the group consisting of titanium dioxide, magnesium oxide, and calcium oxide, with titanium dioxide, which can easily conceal a weld line generated due to an orientation of the special pigment, being preferred.

An average particle diameter of the inorganic oxide may be 50 to 400 nm, preferably 150 to 350 nm, more preferably 200 to 300 nm. When this condition is satisfied, foreign substances generated due to the recycled resin and a weld line appearing in injection molding may be effectively concealed while a reduction in impact resistance of the thermoplastic resin composition may be minimized.

An amount of the inorganic oxide may be 0.1 to 10.0 parts by weight, preferably 0.5 to 8.0 parts by weight, based on 100 parts by weight of the base resin. When this condition is satisfied, a weld line generated due to an orientation of the special pigment may be concealed without a reduction in impact resistance.

### 3) Olefin-based non-grafted polymer

An olefin-based non-grafted polymer is a component which improves the chemical resistance of the thermoplastic resin composition and can effectively conceal foreign substances generated due to the recycled resin through synergy with the special pigment and minimize a reduction in impact resistance.

The olefin-based non-grafted polymer may include: an olefin-based monomer unit; and one or more selected from the group consisting of a (meth)acrylate-based monomer unit and a vinyl acetate monomer unit. The olefin-based non-grafted polymer may include one or more selected from the group consisting of a (meth)acrylate monomer unit and a vinyl acetate monomer unit in an amount of 5 to 50 wt%, preferably 15 to 35 wt%, in order to minimize a reduction in tensile force of the thermoplastic resin composition and further improve chemical resistance.

The olefin-based non-grafted polymer may one or more selected from the group consisting of an ethylene/vinyl acetate polymer, an ethylene/ethyl acrylate polymer, and an ethylene/butyl acrylate polymer.

An amount of the olefin-based non-grafted polymer may be 1.00 to 10.00 parts by weight, preferably 1.50 to 8.00 parts by weight, more preferably 2.00 to 4.00 parts by weight, based on 100 parts by weight of the base resin. When this condition is satisfied, the chemical resistance and impact resistance of the thermoplastic resin composition may be improved while a reduction in tensile force is minimized.

Hereinafter, embodiments of the present invention will be described in detail so that those skilled in the art can easily carry out the present invention. However, the present invention may be embodied in several different forms and is not limited to the embodiments described herein.

### Examples and Comparative Examples

Descriptions of the components used in examples and comparative examples below are as follows.

### 1. Base resin

### 1) Recycled resin: including 15 wt% butadiene monomer units, 22 wt% acrylonitrile monomer units, and 63 wt% styrene monomer units

### 2) New diene-based graft polymer

2-1) New diene-based graft polymer 1: including a butadiene rubber polymer having an average particle diameter of 320 nm and a shell including a styrene unit and an acrylonitrile unit that are grafted to the butadiene rubber polymer, and a grafting rate is 35.0% and a weight-average molecular weight of the shell is 75,000 g/mol.
2-2) New diene-based graft polymer 2: including a butadiene rubber polymer having an average particle diameter of 340 nm and a shell including a styrene unit and an acrylonitrile unit that are grafted to the butadiene rubber polymer, and a grafting rate is 30.0% and a weight-average molecular weight of the shell is 65,000 g/mol.
2-3) New diene-based graft polymer 3: including a butadiene rubber polymer having an average particle diameter of 110 nm and a shell including a styrene unit and an acrylonitrile unit that are grafted to the butadiene rubber polymer, and a grafting rate is 65.0% and a weight-average molecular weight of the shell is 65,000 g/mol.

### 3) New vinyl-based non-grafted polymer

3-1) New vinyl-based non-grafted polymer 1: Styrene/acrylonitrile non-grafted polymer with a weight-average molecular weight of 100,000 g/mol, prepared by polymerization of 75.0 wt% styrene and 25.0 wt% acrylonitrile
3-2) New vinyl-based non-grafted polymer 2: Styrene/acrylonitrile non-grafted polymer with a weight-average molecular weight of 130,000 g/mol, prepared by polymerization of 78.0 wt% styrene and 22.0 wt% acrylonitrile
3-3) New vinyl-based non-grafted polymer: Styrene/acrylonitrile non-grafted polymer with a weight-average molecular weight of 200,000 g/mol, prepared by polymerization of 70 wt% styrene and 30 wt% acrylonitrile

### 2. Additive

### 1) Special pigment

1-1) Cellulose: Illumi Yarn No. 25-05 (average length: 0.5 mm) commercially available from Daiya Kogyo Co., Ltd
2) Inorganic oxide: Titanium dioxide (average particle diameter: 250 nm)
3) Olefin-based non-grafted polymer: EVEA28025 commercially available from LG Chem (melt flow index (190 °C, 2.16 kg): 25 g/10 min, ethylene/vinyl acetate non-graft polymer prepared by polymerization of 72 wt% ethylene and 28 wt% vinyl acetate)

The components described above were mixed in amounts shown in Tables 1 to 4 below and stirred to prepare thermoplastic resin compositions.

### Experimental Example 1

Each thermoplastic resin composition of the examples and comparative examples was extruded to prepare a pellet. The pellet was evaluated using the method described below and results thereof are shown in Tables 1 to 4 below.
1) Melt flow index (g/10 min): Melt flow index was measured according to ASTM D1238 under conditions of 220 °C and 10 kg. In the present invention, processability was judged to be excellent when the melt flow index was 20.0 g/10 min or more.

### Experimental Example 2

Each thermoplastic resin composition of the examples and comparative examples was extruded and injection-molded to prepare a sample. The sample was evaluated using the methods described below and results thereof are shown in Tables 1 to 4 below.
1) IZOD impact strength (kg·cm/cm, 3.2 mm): IZOD impact strength was measured according to ASTM D256. In the present invention, impact resistance was judged to be excellent when the IZOD impact strength was 18.0 kg·cm/cm or more.
2) Tensile strength (kg/cm²): Tensile strength was measured according to ASTM D638. In the present invention, tensile force was judged to be excellent when tensile strength was 380.0 kg/cm² or more.
3) Chemical resistance (hours): The sample prepared according to ASTM D638 was fixed on a jig at a strain rate of 1%, and Nanox, a laundry detergent, was applied to the surface of the sample, and then, the time taken for the sample to be completely broken was measured. In the present invention, chemical resistance was judged to be excellent when the measured time was 30.0 hours or more.
4) Number of foreign substances: One surface of the sample (10 cm×10 cm×3 mm) was observed using an optical microscope (VHX-500 commercially available from Keyence Corporation) at 100x magnification, and the number of foreign substances having a diameter of 200 µm or more with different colors was counted.
   The foreign substance refers to an opaque particle, excluding those formed by the special pigment, which has a diameter of 200 µm or more and a color different from the background color (the color of the resin) and can be observed using an optical microscope. When the number of foreign substances was 10 or less, appearance characteristics were judged to be excellent.
5) Number of weld lines: When a sample with a total of 7 holes that have a diameter of 8.5 mm was injected, the number of weld lines, which appeared due to an orientation of the special pigment as the resin was recombined after flowing through the holes, was counted. When the number of weld lines was 3 or less, an effect of concealing weld lines was judged to be excellent.

**[Table 1]**

| Classification | | Example 1 | Example 2 | Example 3 | Example 4 | Example 5 |
|---|---|---|---|---|---|---|
| Base resin (parts by weight) | Recycled resin | 75.00 | 75.00 | 75.00 | 75.00 | 75.00 |
| | New diene-based graft polymer 1 | 17.00 | 17.00 | 17.00 | 17.00 | 17.00 |
| | New vinyl-based non-grafted polymer 1 | 8.00 | 8.00 | 8.00 | 8.00 | 8.00 |
| Additiv e (parts by weight) | Special pigment (cellulose) | 0.60 | 0.60 | 0.60 | 0.60 | 0.60 |
| | Inorganic oxide | 0.66 | 1.20 | 4.00 | 5.00 | 6.00 |
| | Olefin-based non-grafted polymer | 4.00 | 4.00 | 4.00 | 4.00 | 4.00 |
| Weight ratio of special pigment and inorganic | | 1:1.10 | 1:2.00 | About | About | 1:10.00 |
| oxide | | | 1:6.67 | 1:8.33 | | |
| Melt flow index (g/10 min) | 32.0 | 31.0 | 30.0 | 30.5 | 29.5 | |
| Impact strength (kg·cm/cm) | 20.4 | 20.9 | 20.0 | 19.6 | 18.2 | |
| Tensile strength (kg/cm²) | 381.0 | 391.0 | 390.0 | 393.0 | 394.0 | |
| Chemical resistance (hour) | 41.0 | 39.0 | 42.5 | 41.0 | 38.0 | |
| Number of foreign substances | 7 | 4 | 2 | 0 | 0 | |
| Number of weld lines | 3 | 3 | 1 | 1 | 0 | |

**[Table 2]**

| Classification | | Example 6 | Example 7 | Example 8 | Example 9 |
|---|---|---|---|---|---|
| Base resin (parts by weight) | Recycled resin | 75.00 | 75.00 | 75.00 | 75.00 |
| | New diene-based graft polymer 2 | 17.00 | 0.00 | 17.00 | 17.00 |
| | New diene-based graft polymer 3 | 0.00 | 17.00 | 0.00 | 0.00 |
| | New vinyl-based non-grafted polymer 1 | 8.00 | 8.00 | 0.00 | 0.00 |
| | New vinyl-based non-grafted polymer 2 | 0.00 | 0.00 | 8.00 | 0.00 |
| | New vinyl-based non-grafted polymer 3 | 0.00 | 0.00 | 0.00 | 8.00 |
| Additive (parts by | Special pigment | 0.60 | 0.60 | 0.60 | 0.60 |
| weight) | (cellulose) | | | | |
| | Inorganic oxide | 4.00 | 4.00 | 4.00 | 4.00 |
| | Olefin-based non-grafted polymer | 4.00 | 4.00 | 4.00 | 4.00 |
| Weight ratio of special pigment and inorganic oxide | | About 1: 6.67 | About 1:6.67 | About 1:6.67 | About 1:6.67 |
| Melt flow index (g/10 min) | | 32.0 | 33.0 | 26.0 | 20.0 |
| Impact strength (kg·cm/cm) | | 19.0 | 18.0 | 21.0 | 23.0 |
| Tensile strength (kg/cm²) | | 410.0 | 440.0 | 405.0 | 420.0 |
| Chemical resistance (hour) | | 41.0 | 38.5 | 48.0 | 58.0 |
| Number of foreign substances | | 1 | 1 | 3 | 1 |
| Number of weld lines | | 1 | 1 | 1 | 1 |

**[Table 3]**

| Classification | | Comparative Example 1 | Comparative Example 2 | Comparative Example 3 |
|---|---|---|---|---|
| Base resin (parts by weight) | Recycled resin | 75.00 | 75.00 | 75.00 |
| | New diene-based graft polymer | 17.00 | 17.00 | 17.00 |
| | New vinyl-based non-grafted polymer | 8.00 | 8.00 | 8.00 |
| Additive (parts by weight) | Special pigment (cellulose) | 0.00 | 0.00 | 0.60 |
| | Inorganic oxide | 0.00 | 4.00 | 0.00 |
| | Olefin-based non-grafted polymer | 4.00 | 4.00 | 4.00 |
| Weight ratio of special pigment and inorganic oxide | | - | - | - |
| Melt flow index (g/10 min) | | 30.0 | 31.5 | 31.0 |
| Impact strength (kg·cm/cm) | | 22.0 | 21.0 | 21.0 |
| Tensile strength (kg/cm²) | | 415.0 | 420.0 | 420.0 |
| Chemical resistance (hour) | | 41.5 | 40.0 | 42.5 |
| Number of foreign substances | | 42 | 16 | 2 |
| Number of weld lines | | 0 | 0 | 7 |

**[Table 4]**

| Classification | | Comparati ve Example 4 | Comparati ve Example 5 | Comparati ve Example 6 | Comparati ve Example 7 |
|---|---|---|---|---|---|
| Base resin (parts by weight) | Recycled resin | 75.00 | 75.00 | 75.00 | 75.00 |
| | New diene-based graft polymer | 17.00 | 17.00 | 17.00 | 17.00 |
| | New vinyl-based non-grafted polymer | 8.00 | 8.00 | 8.00 | 8.00 |
| Additive (parts by weight) | Special pigment (cellulose) | 0.60 | 0.60 | 0.60 | 0.60 |
| | Inorganic oxide | 0.03 | 0.60 | 6.30 | 8.00 |
| | Olefin-based non-grafted polymer | 4.00 | 4.00 | 4.00 | 4.00 |
| Weight ratio of special pigment and inorganic oxide | | 1:0.05 | 1:1.00 | 1:10.50 | About 1:13.33 |
| Melt flow index (g/10 min) | | 31.5 | 32.0 | 30.5 | 31.0 |
| Impact strength (kg·cm/cm) | | 21.0 | 20.1 | 16.2 | 16.0 |
| Tensile strength (kg/cm²) | | 420 | 420 | 425 | 425 |
| Chemical resistance (hour) | | 39.5 | 37.5 | 38.5 | 40.5 |
| Number of foreign substances | 2 | 7 | 3 | 0 | |
| Number of weld lines | 6 | 4 | 0 | 0 | |

Referring to Tables 1 to 4, the thermoplastic resin composition of each of Examples 1 to 5, which included a special pigment and an inorganic oxide in a weight ratio of 1:1.10 to 10.00, had an excellent melt flow index, and excellent impact strength, tensile strength, chemical resistance, appearance characteristics, and an excellent effect of concealing weld lines. In addition, when comparing Examples 3, 6, and 7, in which the type of new diene-based graft polymer was varied, it can be seen that the grafting rate of the new diene-based graft polymer and the weight-average molecular weight of the shell in the new diene-based graft polymer significantly affected the melt flow index, impact strength, tensile strength, chemical resistance, and appearance characteristics of the thermoplastic resin composition. On the other hand, when comparing Examples 3, 8, and 9, in which the type of new vinyl-based non-grafted polymer was varied, it can be seen that the composition and weight-average molecular weight of the new vinyl-based graft polymer significantly affected the melt flow index, impact strength, tensile strength, chemical resistance, and appearance characteristics of the thermoplastic resin composition.

However, the thermoplastic resin composition of Comparative Example 1, which does not include both a special pigment and an inorganic oxide, had a large number of foreign substances, and therefore, Comparative Example 1 had reduced appearance characteristics.

In addition, the thermoplastic resin composition of Comparative Example 2, which includes an inorganic oxide but no special pigment, had a large number of foreign substances, and therefore, Comparative Example 2 had reduced appearance characteristics.

The thermoplastic resin composition of Comparative Example 3, which includes a special pigment but no inorganic oxide, had a large number of weld lines, and therefore, Comparative Example 3 had a reduction in the effect of concealing weld lines.

The thermoplastic resin composition of Comparative Example 4, which includes a special pigment and an inorganic oxide in a weight ratio of 1:0.05, had a large number of weld lines, and therefore, Comparative Example 4 had a reduction in the effect of concealing weld lines.

The thermoplastic resin composition of Comparative Example 5, which includes a special pigment and an inorganic oxide in a weight ratio of 1: 1.00, had a large number of foreign substances and weld lines, and therefore, Comparative Example 5 had reduced appearance characteristics and a reduced effect of concealing weld lines.

The thermoplastic resin composition of Comparative Example 6, which includes a special pigment and an inorganic oxide in a weight ratio of 1:10.50, and the thermoplastic resin composition of Comparative Example 7, which includes a special pigment and an inorganic oxide in a weight ratio of 1:13.33, had reduced impact resistance.

## Claims

1. A thermoplastic resin composition comprising:
a base resin including a recycled resin, a new diene-based graft polymer, and a new vinyl-based non-grafted polymer; and
an additive including a special pigment and an inorganic oxide in a weight ratio of 1:1.10 to 10.00.

2. The thermoplastic resin composition of claim 1, comprising the special pigment in an amount of 0.01 to 10.00 parts by weight based on 100 parts by weight of the base resin.

3. The thermoplastic resin composition of claim 1, wherein the special pigment includes one or more selected from the group consisting of cellulose, rayon, and silicate minerals.

4. The thermoplastic resin composition of claim 1, comprising the inorganic oxide in an amount of 0.10 to 10.00 parts by weight based on 100 parts by weight of the base resin.

5. The thermoplastic resin composition of claim 1, wherein the inorganic oxide includes one or more selected from the group consisting of titanium dioxide, magnesium oxide, and calcium oxide.

6. The thermoplastic resin composition of claim 1, wherein the recycled resin includes 8 to 25 wt% of diene-based monomer units, 15 to 30 wt% of vinyl cyanide-based monomer units, and a balance as aromatic vinyl-based monomer units.

7. The thermoplastic resin composition of claim 1, comprising the recycled resin in an amount of 10.00 to 92.00 parts by weight based on 100 parts by weight of the base resin.

8. The thermoplastic resin composition of claim 1, wherein the new diene-based graft polymer includes a diene-based rubber polymer and a shell including an aromatic vinyl-based monomer unit and a vinyl cyanide-based monomer unit that are grafted to the diene-based rubber polymer.

9. The thermoplastic resin composition of claim 1, comprising the new diene-based graft polymer in an amount of 2.00 to 36.00 parts by weight based on 100 parts by weight of the base resin.

10. The thermoplastic resin composition of claim 1, wherein the new vinyl-based non-grafted polymer includes an aromatic vinyl-based monomer unit and a vinyl cyanide-based monomer unit.

11. The thermoplastic resin composition of claim 1, wherein the additive includes an olefin-based non-grafted polymer including: an olefin-based monomer unit; and one or more selected from the group consisting of a (meth)acrylate-based monomer unit and a vinyl acetate monomer unit.

12. The thermoplastic resin composition of claim 11, comprising the olefin-based non-grafted polymer in an amount of 1.00 to 10.00 parts by weight based on 100 parts by weight of the base resin.
